# EUROPEAN PATENT APPLICATION

(11) **EP 2 271 080 A1**
(43) Date of publication of application: **05.01.2011**
(21) Application number: 08873715.0
(22) Date of filing: 05.11.2008
(51) Int. Cl.: H04N 5/44, H04N 5/64, H04N 7/173, H05K 7/18

(54) **AV RACK SYSTEM**

(30) Priority: 01.04.2008 JP 2008094878
(71) Applicant: Sharp Kabushiki Kaisha, Osaka-shi, Osaka 545-8522 (JP)
(72) Inventor: OHKUBO, Shigeru, Osaka-shi Osaka 545-8522 (JP); YOSHIDA, Motoki, Osaka-shi Osaka 545-8522 (JP)
(74) Representative: Müller - Hoffmann & Partner
(86) International application number: PCT/JP2008/070077
(87) International publication number: WO 2009/122611

(57) **Abstract**

A function for enhancing the operability of a user by strengthening the cooperation of a TV and an external apparatus furthermore by communication is attracting attention. Although various technologies are provided, it is not possible to acquire information such as the state or the type of an apparatus itself by simply connecting the apparatus and to control an AV rack itself. Furthermore, the profile of an electronic apparatus being inserted into the rack and the location of the terminal are limited. The AV rack system of this invention is **characterized in that** a physical address is allotted to a terminal mounted on an AV rack, and the AV rack is controlled in association with the terminal of a connected electronic apparatus.

## Description

### Field of the Invention

The present invention relates to an AV rack capable of storing an AV apparatus, and to a technology of recognition and control of the AV apparatus stored in the rack by connecting with a TV via a terminal, provided for the rack and having a physical address.

### Background Art

Recently, we can buy a home theater set including a large-screen TV and a surround-sound system, which had been expensive, at a relatively low price thanks to the progress of technology. Here, the number of individuals who establish a home theater in their home and enjoy its high-quality sound and visual quality has been increasing. In such a situation, a function, which enhances the interconnecting of the TV and external devices such as an amplifier, a recording device and a player, thereby improving user friendliness, has gained popularity.

In Japanese Unexamined Patent Application Publication No. 2002-314903, a technology relating to a TV, which has storage space and has the capability to store an electronic device in the storage space, is disclosed. Specifically, the electronic device equipped with an adaptor box is placed in the storage space in the TV body, thereby connecting the electronic device and the TV via the adaptor box. Moreover, in Japanese Unexamined Patent Application Publication No. H02-246400, an AV rack having a bus line and a connector is disclosed. Specifically, the electronic device is placed in the AV rack, and the bus line and the connector are connected, thereby interconnecting the devices mutually connected via communication using the bus.
Patent Reference 1: Japanese Unexamined Patent Application Publication No. 2002-314903
Patent Reference 2: Japanese Unexamined Patent Application Publication No. H02-246400

### Disclosure of the Invention

### Problems that the Invention Tries to Solve

However, in the above AV rack system, there is a deficiency that can be described as follows. Therefore, in the technologies in the above references, the devices are just connected and the AV rack itself cannot be controlled by acquiring information such as status or type of device. Specifically, it is impossible to control a door of the storage space, where a DVD recorder is placed, to not open while the DVD recorder is playing. Moreover, even if the door of the AV rack closes, an operation of ejecting a disc tray of the DVD recorder is possible. Furthermore, there are some restrictions on the shape of the electronic device to be placed in the rack and on the arrangement of terminals.

### Means for Solving the Problems

In order to solve the above deficiencies, in the present invention, each respective terminal of the AV rack has a physical address, and is controlled corresponding to a terminal of the connected electronic device. Moreover, according to the type and status of the device stored in the AV rack, attachment devices of the AV rack are controlled.

In a first aspect of the invention, we provide an AV rack system, comprising storage spaces for a plurality of electronic devices; a connection unit for communication, which is correlated with identification of ID used for transmission/reception of an operation signal by the electronic devices to be placed in the respective storage spaces; a storage for electronic device ID, correlating a connection ID of the connection unit for communication with an electronic device ID for identifying the electronic device using the connection ID, and storing the IDs; an acquisition unit for operation signal; an acquisition unit for signal for selecting device, acquiring a signal for selecting device correlated with the electronic device ID; an acquisition/storage unit for connection ID for communication, searching the storage for electronic device ID using the electronic device ID correlated with the acquired signal for selecting device as a key, and acquiring and storing the connection ID of the connection unit for communication as a transmission destination for the operation signal; and an acquisition unit for operation signal for electronic device, receiving the operation signal to be transmitted for the stored connection ID.

In a second aspect of the invention, we provide the AV rack system based on the first aspect, further comprising: an acquisition unit for device information, acquiring device information correlated with the electronic device ID from the electronic device connected with the connection unit for communication, the device information including at least the type of device; and a storage for device information, storing the acquired device information correlated with the electronic device ID, wherein the acquisition unit for signal for selecting device comprises means for selecting device information, acquiring information for selecting device correlated with the device information stored in the storage for device information, and the acquisition unit for connection ID for communication comprises means for acquiring connection ID according to device information, acquiring the connection ID by utilizing the electronic device ID acquired from the storage for device information according to the device information selected by the means for selecting device information.

In a third aspect of the invention, we provide the AV rack system based on the first and second aspects, further comprising: an attachment device for storage space, equipped in each storage space; a storage for control terminal ID, correlating a control terminal ID of the attachment device for storage space with the connection ID corresponding to the storage space, and storing the IDs; an acquisition unit for operation signal for attachment device, acquiring an operation signal for the attachment device for storage space; and a transmission unit for operation signal for attachment device, acquiring the control terminal ID correlated with the connection ID acquired by the acquisition unit for connection ID from the storage for control terminal ID, and transmitting the acquired operation signal for attachment device to the control terminal identified by the acquired control terminal ID.

In a fourth aspect of the invention, we provide the AV rack system based on any one of the first to third aspects, wherein the acquisition unit for operation signal for attachment device comprises, means for storing operation signal table, storing an operation signal table determining the operation signal for attachment device according to the operation signal for electronic device, and means for acquiring table, acquiring the operation signal for attachment device from the operation signal table according to he acquired operation signal for electronic device.

In a fifth aspect of the invention, we provide the AV rack system based on the second or third aspect, wherein the attachment device is an illumination device for the respective storage spaces.

In a sixth aspect of the invention, we provide the AV rack system based on any one of the second to fourth aspects, wherein the attachment device is a door-opening motor for the respective storage spaces.

In a seventh aspect of the invention, we provide the AV rack system based on any one of the first to sixth aspects, wherein the electronic device equipped in the storage space and the AV rack are mutually connected through a cable complying with HDMI (High-Definition Multimedia Interface) standard, and signal complying with CEC (Consumer Electronics Control) standard is used.

### Effects of the Invention

According to the AV rack system of the present invention having the above configuration, it is possible to prevent undesired operations (e.g., ejection of disc tray when the door of the rack closes) of the electronic devices placed in the AV rack. Moreover, the attachment devices of the AV rack are controlled, thereby greatly enhancing the impact of the AV system (e.g., illumination is off when player is playing or illumination is on upon opening of the door when ejecting the disc tray).

### DETAILED DESCRIPTION OF THE INVENTION

Embodiments of the present invention will be described hereinbelow with reference to the drawings. The present invention is not to be limited to the above embodiments and able to be embodied in various forms without departing from the scope thereof.

Moreover, in the present invention, as CEC (Consumer Electronics Control) complying with HDMI (High-Definition Multimedia Interface) standard, all devices may be physically connected via wired or wireless digital interface signal lines.

The first embodiment will mainly describe Claim 1. The second embodiment will mainly describe Claim 2. The third embodiment will mainly describe Claims 3, 5 and 6. The fourth embodiment will mainly describe Claim 4.

### <<First Embodiment>>

### <Concept of First Embodiment>

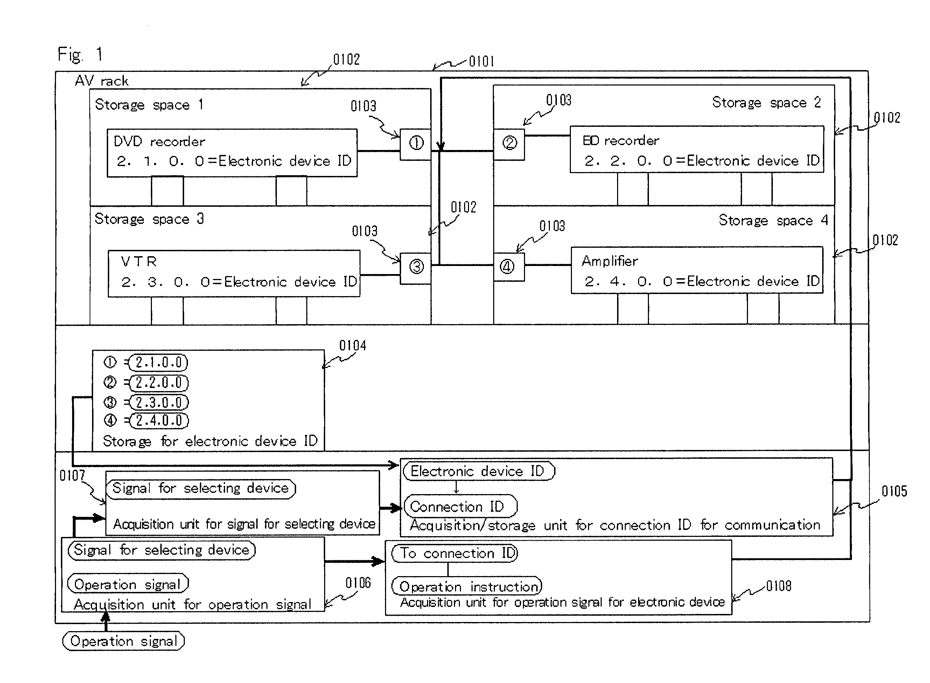

Fig. 1 is a configuration diagram showing an example of function and configuration of an AV rack system of a first embodiment. In the AV rack of the first embodiment, four storage spaces are provided, and the storage space is provided with a connection unit for communication to connect with the electronic device. In each storage space, the electronic device is placed (for example, a DVD player is placed in a storage space 1, and a BD player is placed in a storage space 2). Moreover, the connection unit for communication of the storage space and the connection unit for communication of the electronic device are mutually connected via an interface such as HDMI. Moreover, the connection unit for communication is configured by communication lines extended on a wall of the rack, and routing management of transmission destinations of operation instructions is carried out using connection ID given to the connection unit for communication.

In the first embodiment, the electronic device ID stored by the electronic device placed in the storage space and the connection ID stored by the connection unit for communication provided in the storage space are correlated, stored and managed. Moreover, by routing using the connection ID, it is possible to transmit the operation signal received by the AV rack to the electronic device placed in the designated storage space, thereby operating the electronic device.

### <Functional Configuration of First Embodiment>

The functional block of the AV rack system can be implemented by hardware, software, or both hardware and software. Specifically, in the case of using a computer, the respective units are implemented by the hardware configured by a CPU, a main memory, a bus, a secondary storage device (e.g., a hard disk or a nonvolatile memory, a storage media such as CD-ROM or DVD-ROM, or a reading drive for the above media), printing device, display device, other peripheral devices, and I/O ports for the other peripheral devices; and driver program for controlling the above hardware, other application programs, and user interface for inputting information.

Moreover, this hardware and software is used for calculation by the CPU in accordance with the program developed on the main memory, for processing, storing and outputting of the data stored in the memory or the hard disk, or data inputted through the interface, and for controlling the respective hardware components. Moreover, the present invention can be implemented not only as an apparatus but also as a method thereof. Moreover, a portion of such inventions may be configured as software. Furthermore, a software product used for causing a computer to execute the software, and the recording medium, in which the software is installed, should be included in the technical scope of the present invention (the same applies throughout the entire specification).

Hereinafter, components of an 'AV rack' (0101) of the first embodiment will be described with reference to Fig. 1 etc.

The 'AV rack' (0101) of the first embodiment comprises at least a 'storage space', a 'connection unit for communication', a 'storage for electronic device ID', a 'acquisition/storage unit for connection ID for communication', an 'acquisition unit for operation signal', an 'acquisition unit for signal for selecting device', an 'acquisition unit for operation signal for electronic device', an 'acquisition unit for device information', and a 'storage for device information'. Moreover, the 'acquisition unit for signal for selecting device' further comprises 'means for selecting device information' and the 'acquisition unit for connection ID for communication' further comprises 'means for acquiring connection ID according to device information'.

The 'storage space' (0102) stores a plurality of electronic devices. As shown in Fig. 1, the storage space is for storing the electronic device. The storage space can store various electronic devices such as a DVD recorder and an amplifier. Normally, the electronic device is horizontally placed, but may be vertically placed. There are four storage spaces in the first embodiment, and any number of spaces may be provided according to the shape of the AV rack. Moreover, as described below, the 'storage space' (0102) is provided with the 'connection unit for communication' (0103) for connection with the electronic device.

The 'connection unit for communication' (0103) has a function of which is correlated with identification of ID used for transmission/reception of an operation signal by the electronic devices to be placed in the respective storage spaces. Specifically, the 'connection unit for communication' is provided in the respective 'storage spaces' (0102), and is a wireless reception unit and a wired-connection terminal, having a function of connecting with the stored electronic device. The 'connection unit for communication' (0103) in each storage space has a connection ID corresponding to a number of each storage space (for example, connection ID=1 for the storage space 1, and connection ID=2 for the storage space 2). As mentioned below, in the AV rack, a terminal provided in the storage space and a terminal of the stored electronic device are connected, thereby correlating and storing the connection ID and the electronic device ID Of the electronic device. Therefore, it is possible to recognize which device is stored in which storage space with reference to the two IDs. Note that, it is unnecessary for the number of the storage space to be the same as the connection ID. Specifically, if the storage space can be specified according to the connection ID and the number of storage space of the AV rack, the number of storage space and the connection ID may be different values.

The 'storage for electronic device ID' (0104) has a function of correlating a connection ID of the connection unit for communication with an electronic device ID for identifying the electronic device using the connection ID, and storing the IDs. Specifically, as shown in Fig. 1, the electronic device ID stored in the electronic device placed in the storage space (e.g., an ID '2100' of the device placed in the 'storage space 1' and an ID '2200' of the device placed in the 'storage space 2') and the connection ID preliminarily assigned to the terminal in each storage space (e.g., '1' for the storage space 1 and '2' for the storage space 2) are correlated and stored. Subsequently, the 'storage for electronic device ID' (0104) is referred by the after-mentioned 'acquisition unit for connection ID for communication' (0105). The detailed description of the 'acquisition unit for connection ID for communication' (0105) will be provided.

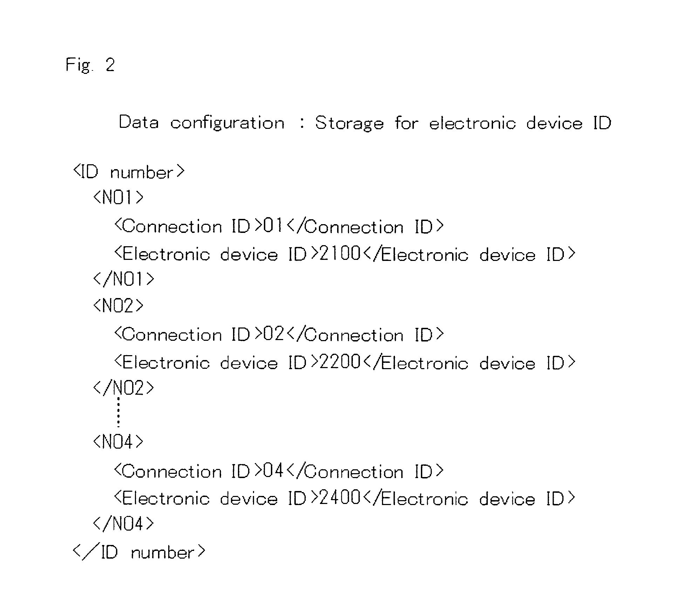

Fig. 2 is a diagram showing data configuration in a storage for electronic device ID of the AV rack system of the first embodiment for correlating a connection ID with an electronic device ID and storing the IDs. The data of Fig. 2 is written in XML format. In this data configuration, the connection ID and the electronic device ID are correlated and stored (for example, 'connection ID'='01' for 'ID number', 'No.1', and 'electronic device ID'='2100'). Here, the 'ID number' is just a serial number and a variable having no affect on other components.

The 'acquisition unit for operation signal' (0106) receives an operation signal transmitted from the user side. Specifically, as shown in Fig. 1, the operation signal including the signal for selecting device and the operation signal for electronic device is received in the first embodiment. Here, the operation signal may include a signal other than the signal for selecting device and the operation signal for electronic device. For example, the after-mentioned instruction to operate the attachment device equipped in the AV rack may be included. Moreover, the operation signal may be acquired from the signal transmitted from a remote control equipped in the AV rack, and may be acquired from signal transmitted from a special remote control equipped in the respective electronic devices in the storage space of the AV rack (for example, an operation signal to operate the DVD recorder, transmitted from the special remote control equipped in the DVD recorder, is acquired). Moreover, the remote control signal (operation signal) received by any one of the electronic devices placed in the storage spaces of the AV rack is transmitted via other electronic device, so that the electronic device as a target, which has received the remote control signal, may acquire the operation signal (for example, a signal to operate a TV connected with the AV rack, which has been received by an amplifier as an electronic device placed in the storage space, is transmitted to the TV (via the amplifier)).

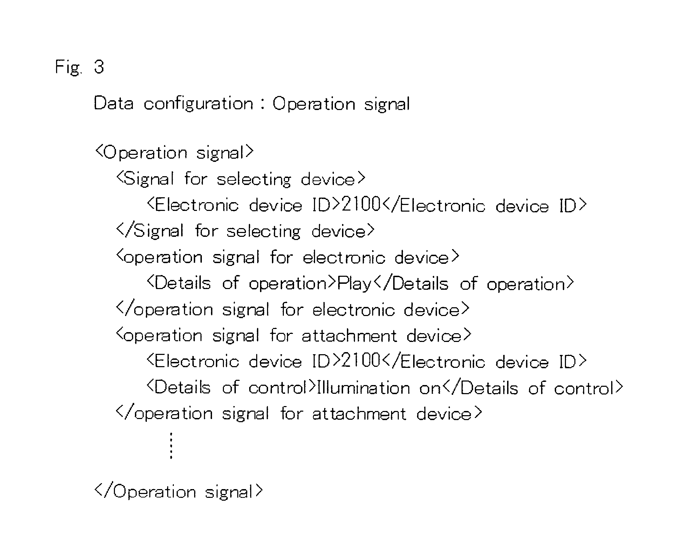

Fig. 3 is a diagram showing data configuration of the operation signal to actually be received. As shown in Fig. 3, the operation signal is written in XML format. In the data configuration, a plurality of different signals (e.g., the signal for selecting device and the operation signal for electronic device) are included as the operation signal. In Fig. 3, the operation signal is configured by the signal for selecting device, the operation-electronic device, and the operation signal for attachment device. The signal for selecting device includes the electronic device ID (here, it is '2100') as data. The operation signal for electronic device includes detail of operation (here, it is 'play') as data. The operation signal for attachment device includes the control terminal ID (here, it is '2190') and detail of control (here, it is 'illumination-on') as data. Here, as described above, it is possible to include a plurality of signals according to circumstances. Note that, the operation signal of the first embodiment necessarily includes the signal for selecting the device for identifying the connection ID, and a signal to actually operate the device.

The 'acquisition unit for signal for selecting device' (0107) has a function of acquiring a signal for selecting device correlated with the electronic device ID. Specifically, the signal for selecting device included in the signal acquired by the 'acquisition unit for operation signal' (0106) is acquired. Subsequently, an operation to send the acquired signal for selecting device to the after-mentioned 'acquisition unit for connection ID for communication' (0105) is executed.

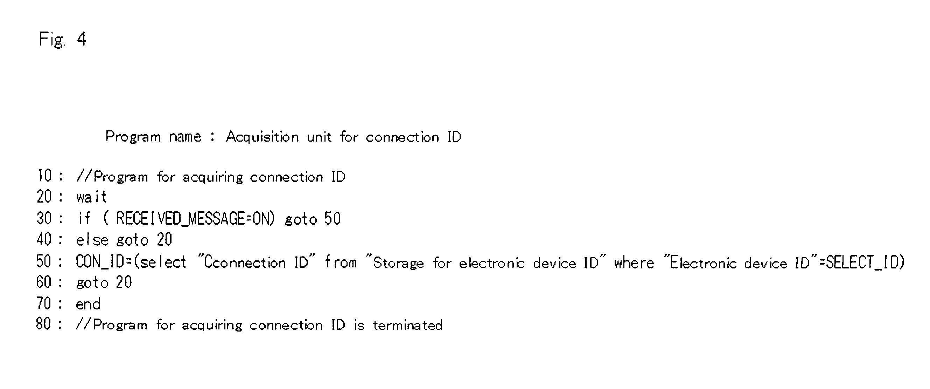

Fig. 4 shows a program for actually acquiring the signal for selecting device from the operation signal. This program executes a process for acquiring the signal for selecting device from the operation signal acquired by the acquisition unit for operation signal of Fig. 3. The processing flow of the program of Fig. 4 is as follows. At the outset, reception of the operation signal is detected (Fig. 4, Line 30). When receiving the operation signal, the electronic device ID included in the signal is acquired (Fig. 4, Line 50). Subsequently, the acquired electronic device ID is sent to the after-mentioned 'acquisition unit for connection ID for communication' (0000) (Fig. 4, Line 60).

The 'acquisition unit for connection ID for communication' (0105) has a function of searching the storage for electronic device ID using the electronic device ID correlated with the acquired signal for selecting device as a key, and acquiring and storing the connection ID of the connection unit for communication as a transmission destination for the operation signal. Specifically, at the outset, the signal for selecting device acquired by the 'acquisition unit for signal for selecting device' (0107) is received. Here, the received signal for selecting device is information including at least the electronic device ID of the electronic device, which the user desires to operate. Subsequently, the 'acquisition unit for connection ID for communication' (0105) refers to the 'storage for electronic device ID' (0104) based on the electronic device ID included in the received information. Subsequently, the 'acquisition unit for connection ID for communication' (0105) specifies the connection ID as a transmission destination of the operation signal received by the 'acquisition unit for operation signal for electronic device' (0108). Here, as described in a second embodiment, the received signal for selecting device may be a signal including arbitrary number correlated with the electronic device ID outputted on the selection screen (e.g., 2100:1 or 2200:2), or may be a signal directly indicating the device (e.g., DVD recorder).

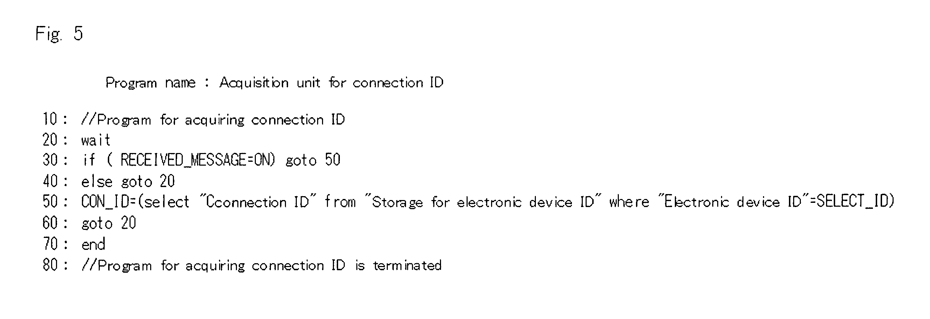

Fig. 5 is a diagram showing a program for acquiring the connection ID based on the received signal for selecting device. The processing flow of the program of Fig. 5 is as follows. At the outset, the signal for selecting device is received and detected (Fig. 5, Line 30). Subsequently, searching the storage for electronic device ID is executed using the acquired electronic device ID as a key, and corresponding connection ID is acquired (Fig. 5, Line 50). Subsequently, the acquired connection ID is stored.

The 'acquisition unit for operation signal for electronic device' (0108) has a function of receiving the operation signal to be transmitted for the stored connection ID. Specifically, the operation signal for electronic device to actually operate the electronic device placed in the AV rack is acquired from the operation signal received in the 'acquisition unit for signal for selecting device' (0107). Here, examples of the received operation signal for electronic device include an instruction to play DVD, and an instruction to stop it.

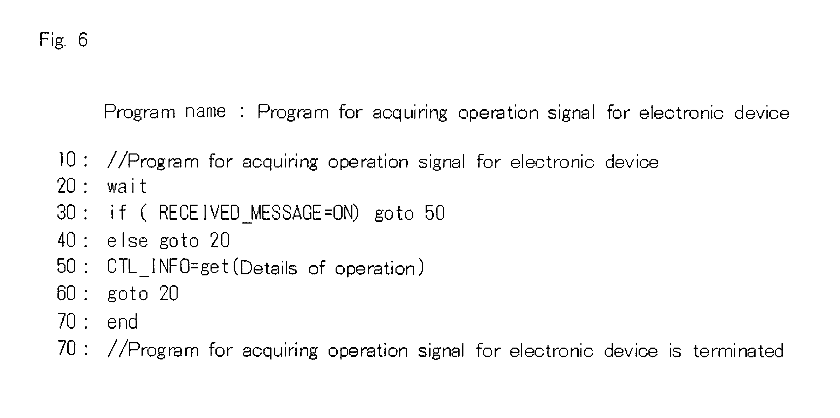

Fig. 6 is a diagram showing a program for actually acquiring an operation signal for electronic device from the operation signals. This program executes process for acquiring the operation signal for electronic device from the operation signal acquired by the acquisition unit for operation signal of Fig. 3. The processing flow of the program of Fig. 6 is as follows. At the outset, reception of the operation signal is detected (Fig. 6, Line 30). Subsequently, when receiving the operation signal, the detail of operation included in the signal are acquired (Fig. 6, Line 50).

### <Hardware Configuration of First Embodiment>

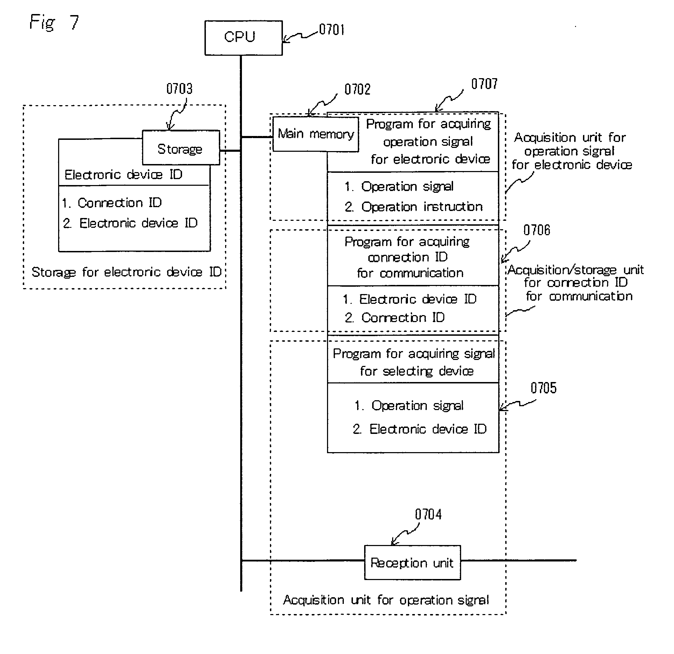

Hereinafter, an example of a configuration where functional components of the 'AV rack' of the first embodiment are implemented as hardware, will be described with reference to Fig. 7.

Fig. 7 is a diagram showing an example of a hardware configuration of the 'AV rack' of the first embodiment. With reference to Fig. 7, operation of each hardware of the AV rack of the first embodiment will be described.

As shown in Fig. 7, the 'AV rack' comprises a 'CPU' (0701) for various calculations and controls and a 'main memory' (0702). Moreover, the 'AV rack' comprises a 'storage' (0703) for storing the electronic device ID and the device information, and a 'reception unit' (0704) for acquiring various information transmitted from the user side. These components are mutually connected via a data communication path such as a 'system bus', thereby executing transmission/reception and processing of information.

Here, when playing the DVD recorder in the storage space 1 of the AV rack, the user firstly transmits the operation signal, including the electronic device ID of the DVD recorder as an operation target and an instruction to play etc. When the 'reception unit' (0704) receives the operation signal, the AV rack calls a 'program for acquiring signal for selecting device' (0705) developed on a work area in the 'main memory' (0702). The called 'program for acquiring signal for selecting device' (0705) acquires the electronic device ID included in the operation signal (here, the electronic device ID of the DVD recorder placed in the storage space 1), and sends the ID to a 'program for acquiring connection ID for communication' (0706). The 'program for acquiring connection ID for communication' (0706) receives the electronic device ID, refers to the 'storage' (0703), and specifies the connection ID. Finally, the acquired connection ID is sent to the AV rack.

Simultaneously with the specifying the connection ID, the AV rack calls a 'program for acquiring operation signal for electronic device' (0707) developed on the work area in the 'main memory' (0702). The called 'program for acquiring operation signal for electronic device' acquires the operation instruction included in the operation signal (here, the instruction to play is acquired). Subsequently, the acquired operation instruction is sent to the AV rack.

Here, an order of the specifying of the connection ID and the acquiring of the operation instruction may be reversed.

As described above, when receiving the connection ID and the operation instruction, the AV rack transmits the operation instruction to the specified connection ID. Subsequently, when receiving the operation instruction, the DVD recorder carries out playback.

### <Processing Flow of First Embodiment>

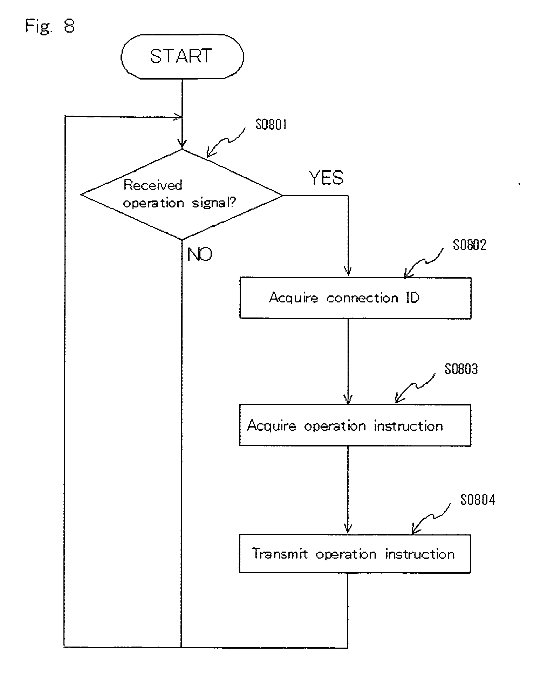

Fig. 8 is a flowchart showing processes from reception of the operation signal to transmission of an operation instruction in the AV rack system of the first embodiment. Note that, the flowing steps may be processing steps for configuring a program for controlling a computer, which is recorded in a media.

At the outset, the operation signal is received (S0801). When receiving the operation signal, the connection ID is specified by the operation signal (S0802). Subsequently, the operation instruction to operate the electronic device is acquired from the operation signal (S0803). When acquiring the connection ID and the operation instruction, the operation instruction is transmitted to the acquired connection ID (S0804).

### <Brief Description of Effects of First Embodiment>

According to the AV rack system of the first embodiment, it is possible to manage the storage space of the AV rack storing various electronic devices and the electronic devices by correlating the electronic device ID and the connection ID. Therefore, it is possible to recognize the electronic devices stored in the storage spaces. Moreover, the operation signal is transmitted to the AV rack, thereby operating the electronic device stored in any storage space.

### <<Second Embodiment>>

### <Concept of Second Embodiment>

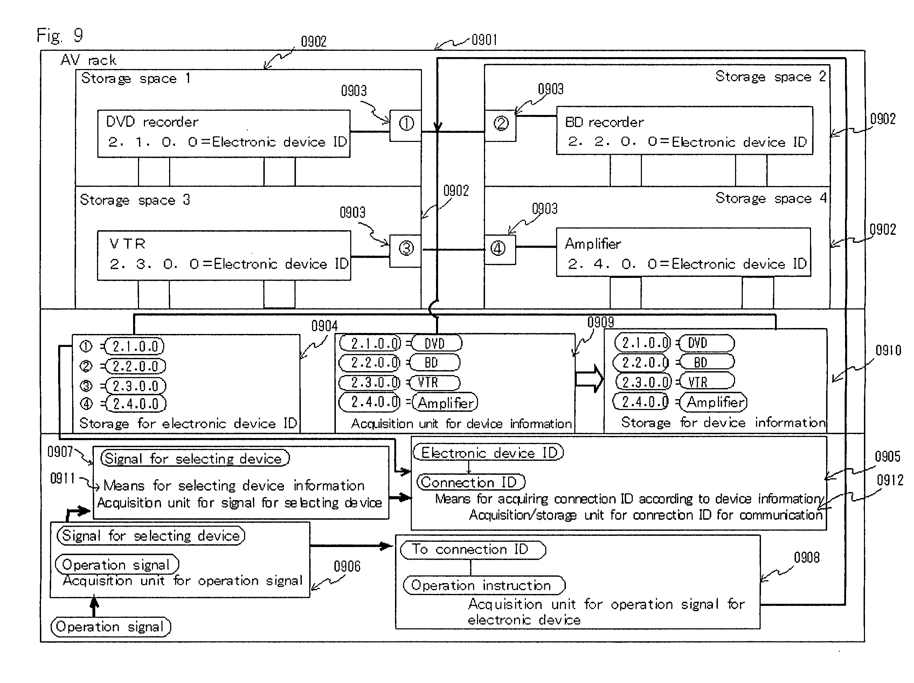

In a second embodiment based on the first embodiment, as shown in Fig. 9, device information (e.g., its type, its manufacturer, or its model number) of the electronic device stored in the storage space is acquired, correlated with the electronic device ID, and managed. Moreover, the electronic device to be operated is selected and specified by the device information, so that it is possible to operate the electronic device without depending on the type or manufacturer of the stored electronic device.

### <Functional Configuration of Second Embodiment>

Fig. 9 is a configuration diagram showing an example of an AV rack system of the second embodiment. As shown in Fig. 9, in the second embodiment based on the first embodiment, an 'acquisition unit for device information' (0909) and a 'storage for device information' (0910) are further comprised. The 'acquisition unit for signal for selecting device' (0907) comprises 'means for selecting device information' (0911), and the 'acquisition unit for connection ID for communication' (0905) comprises 'means for acquiring connection ID according to device information' (0912).

Note that, descriptions of the components already described in the first embodiment will be omitted, and only descriptions of components specific to the second embodiment will be provided.

The 'acquisition unit for device information' (0909) has a function of acquiring device information correlated with the electronic device ID from the electronic device connected with the connection unit for communication, the device information including at least device type. Specifically, as shown in Fig. 9, at the outset, communication among the Av rack and the electronic devices stored in the respective storage spaces is established via terminals equipped in the storage space. Subsequently, the AV rack acquires the information of each electronic device placed in the storage space with the electronic device ID. Here, the information of the electronic device includes type (e.g., DVD recorder or Blu-Ray Disc), manufacturer (a manufacturer of the electronic device), and model number (e.g., model number of the manufacturer for the electronic device). Subsequently, the acquired information is sent to the 'storage for device information' (0910). Here, the current status of the device being connected may be acquired with the type of device. Moreover, as to the device capable of disc loading such as DVD recorder, disc loading information and detail of the loaded disc may be acquired. As described in a third embodiment, the 'acquisition unit for device information' (0909) also acquires information regarding the attachment devices equipped in the AV rack.

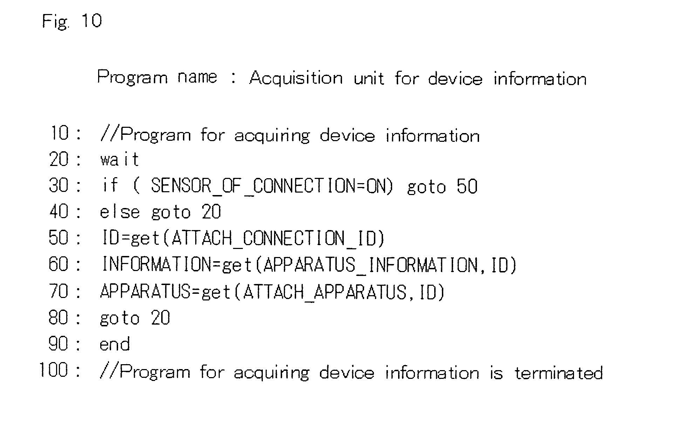

Fig. 10 is a diagram showing a program in an acquisition unit for device information of the AV rack system of the second embodiment for actually acquiring stored device information. The program of Fig. 10 is written so as to operate as follows. At the outset, it is assumed that the DVD recorder is connected to the terminal of the storage space 1. As shown in Fig. 10, Line 30, the program detects the connection of the electronic device. When detecting the connection, as shown in Fig. 10, Line 50, the ID of the storage space including the connection is acquired (here, 'No.1' is acquired for the storage space 1). Subsequently, as shown in Fig. 10, Lines 60 and 70, the electronic device ID and the electronic device information are acquired using the acquired ID as a key (here, 'electronic device ID'='2100', 'electronic device information'='DVD recorder').

The 'storage for device information' (0910) has a function of correlating the acquired device information and the electronic device ID, and storing the IDs. Specifically, as shown in Fig. 9, the electronic device ID and the electronic device information, which have been acquired by the 'acquisition unit for device information' (0909), are recorded and stored. The 'storage for device information' (0910) is referred by the above 'storage for electronic device ID' (0904) and the after-mentioned 'means for acquiring connection ID according to device information' (0912). The description of the 'means for acquiring connection ID according to device information' (0912) will be provided.

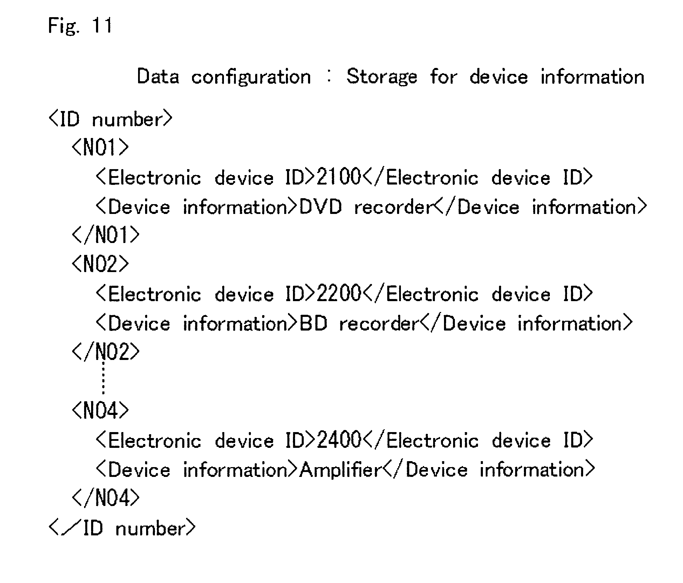

Fig. 11 is a diagram showing a data configuration for correlating an electronic device ID with device information and storing them. Here, the stored data has been acquired by the acquisition unit for device information. The data of Fig. 11 is written in XML format. In this data, the 'electronic device ID' and the 'device information' are correlated using the ID as a key (for example, 'connection ID'='01' for 'ID number', 'No.1', and 'electronic device ID'='2100'). Here, the 'ID number' is just a serial number and a variable having no affect on other components.

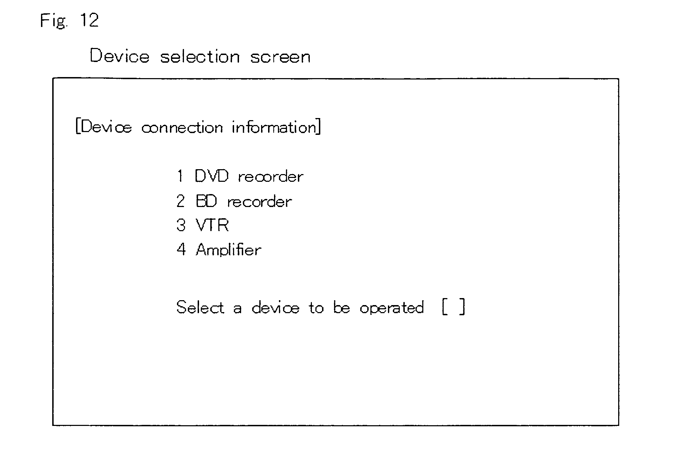

The 'means for selecting device information' (0912) acquires information for selecting device correlated with the device information stored in the storage for device information. Specifically, as shown in Fig. 12, at the outset, a list of device information stored in the 'storage for device information' (0910) is outputted as the selection screen to TV etc. Subsequently, the user selects the device information outputted on the selection screen (for example, the outputted 'DVD recorder' is selected). Subsequently, the 'means for selecting device information' (0911) sends the device information selected by the user to the after-mentioned 'means for acquiring connection ID according to device information' (0912). Here, the device may be selected on the selection screen by inputting the device information, or by inputting a number correlated with the device. Moreover, the selection screen itself may be outputted to the screen of a mobile phone or remote control via the network etc.

The 'means for acquiring connection ID according to device information' (0912) acquires the connection ID by utilizing the electronic device ID acquired from the storage for device information according to the device information selected by the means for selecting device information. Specifically, the 'means for acquiring connection ID according to device information' (0912) receives the device information acquired by the 'means for selecting device information' (0911). Subsequently, the 'means for acquiring connection ID according to device information' (0912) refers to the 'storage for device information' (0910) using the device information as a key, thereby acquiring the electronic device ID. Subsequently, the 'means for acquiring connection ID according to device information' (0912) refers to the 'storage for electronic device ID' (0904) using the device information as a key, thereby specifying and acquiring the connection ID.

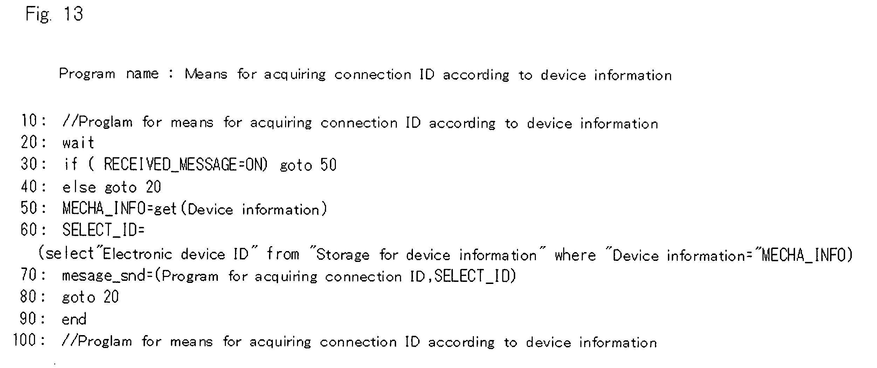

Fig. 13 is a diagram showing a program for actually acquiring the connection ID based on the received device information. The program of Fig.13 is written so as to operate as follows. At the outset, when the device information is sent from the 'means for selecting device information' (0911), the program detects that the device information has been sent as Fig. 13, Line 30. Subsequently, when receiving the device information, as shown in Fig. 13, Line 50, the device information is acquired (for example, 'DVD recorder'). Subsequently, as shown in Fig. 13, Line 60, the storage for device information is referred using the device information as a key, thereby acquiring the electronic device ID (in the case of device information ='DVD recorder', the electronic device ID=2100 is acquired). Subsequently, as shown in Fig. 13, Line 70, the acquired electronic device ID is sent to the program for actually acquiring the connection ID, thereby acquiring the connection ID. Here, description of the program for actually acquiring connection ID has already been provided, so that the description is omitted.

### <Hardware Configuration of Second Embodiment>

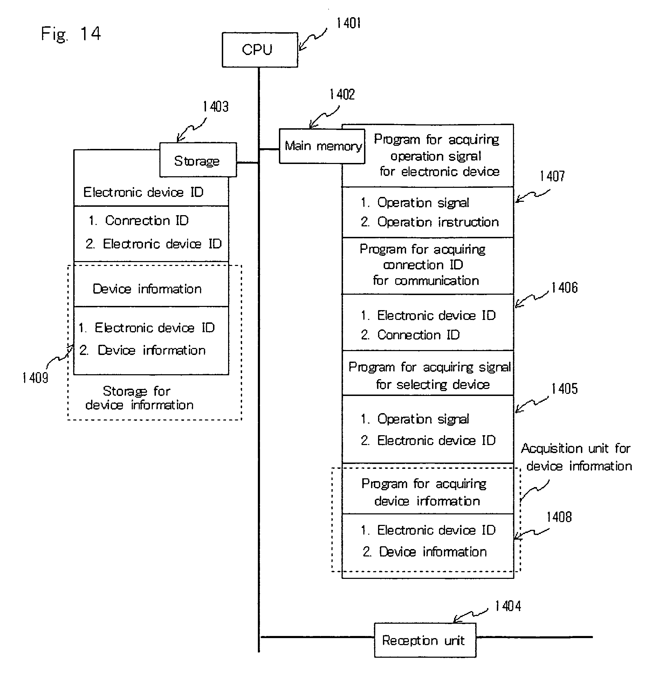

Fig. 14 is a diagram showing an example of a hardware configuration of the `AV rack' of the second embodiment. With reference to Fig. 14, operation of each hardware of the AV rack of the second embodiment will be described. As shown in Fig. 14, the `AV rack' comprises a 'CPU' (1401) for various calculations and controls and a 'main memory' (1402), a 'storage' (1403), and a 'reception unit' (1404).

Here, it is assumed that the user operates the preliminarily added 'DVD recorder'. At the outset, the 'program for acquiring device information' (1407), developed on a work area in the 'main memory' (1402), is called. The called 'program for acquiring device information' (1408) acquires information of the electronic device connected to the AV rack system, thereby executing storage and update in the 'storage' (1409). Subsequently, the 'program for acquiring device information' (1408) acquires the device information from the 'storage' (1409), and outputs the selection screen as shown in Fig. 12.

Here, it is assumed that the user checks the outputted selection screen and selects the DVD recorder. When the user selects the DVD recorder from the selection screen, the 'program for acquiring connection ID for communication' (1406) is called from a work area. The called 'program for acquiring connection ID for communication' (1406) acquires the electronic device ID from the 'storage' (1409), thereby acquiring and specifying the connection ID. Subsequently, the connection ID is sent to the AV rack.

Here, when the user operates the DVD player (for example, presses the playback button of the DVD player) after selecting the device information, the 'reception unit' (1404) receives the operation signal. When receiving the operation signal, a 'program for acquiring operation signal for electronic device' (1407), developed on a work area in the 'main memory' (1402), is called. The called 'program for acquiring operation signal for electronic device' acquires the operation instruction included in the operation signal (here, the instruction of playback is acquired). The acquired operation instruction is sent to the AV rack.

### <Processing Flow of Second Embodiment>

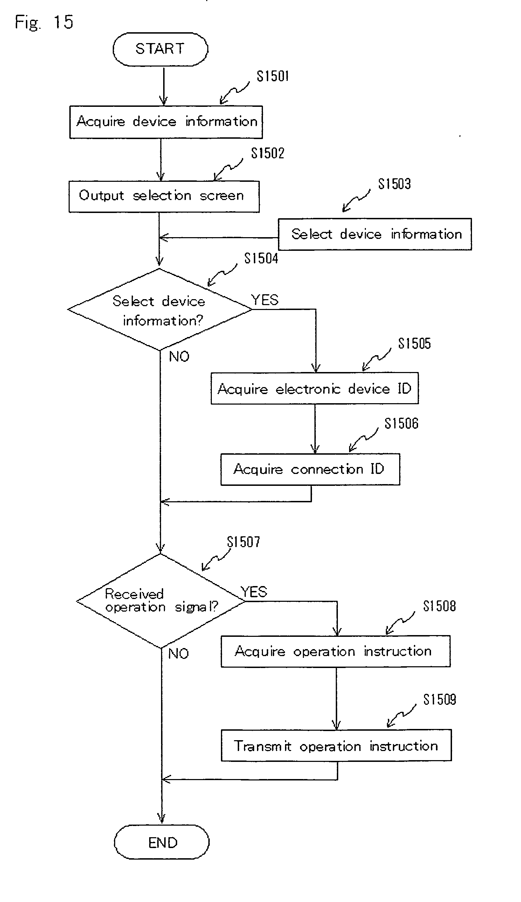

Fig. 15 is a flowchart showing processes from output of the selection screen to transmission of an operation instruction in the AV rack system of the second embodiment. Note that, the flowing steps may be processing steps for configuring a program for controlling a computer, which is recorded in a media.

At the outset, the device information of the electronic device connected to the AV rack is acquired (S1501). When acquiring the device information, the selection screen displaying the list of the device information is outputted (S1502). The user selects the device information outputted on the selection screen (S1503). When detecting the selection of the device information (S1504), the electronic device ID corresponding to the device information based on the selected device information is acquired (S1505). When acquiring the electronic device ID, the corresponding connection ID is specified based on the electronic device ID (S1506).

When specifying the connection ID, the operation signal is received. When detecting the operation signal (S1507), the operation signal is acquired (S1508). When acquiring the operation signal, the operation instruction is sent to the acquired connection ID (S1509).

### <Brief Description of Effects of Second Embodiment>

According to the AV rack system of the second embodiment, it is possible to operate various electronic devices stored in the AV rack by selecting the electronic device in the selection screen outputted on the TV etc. Therefore, it is possible to manage combinations of various electronic devices of different manufacturers and different types.

### <<Third Embodiment>>

### <Concept of Third Embodiment>

In a third embodiment based on the first or second embodiment, the attachment device is stored in each storage space. Moreover, the control terminal ID of the attachment device and the connection ID are correlated, and the attachment device is stored. Moreover, the attachment device can be operated by an operation signal for attachment device.

### <Functional Configuration of Third Embodiment>

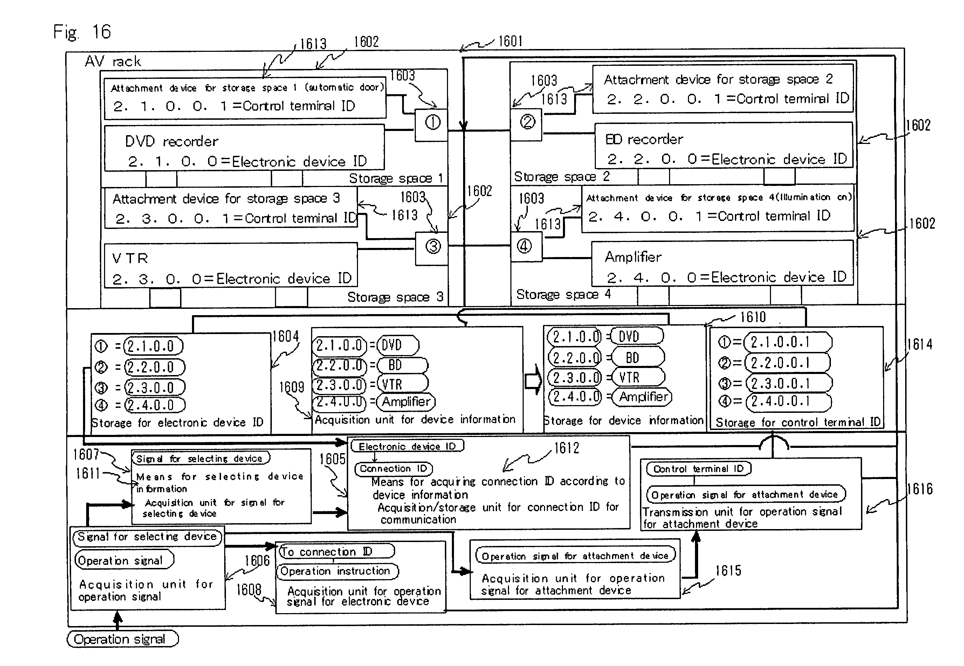

Fig. 16 is a configuration diagram showing an example of an AV rack system of the third embodiment. In the third embodiment, there are two types of embodiment, one is based on the first embodiment, and another is based on the second embodiment. Here, the embodiment based on the second embodiment will be described. As shown in Fig. 16, in the third embodiment based on the second embodiment, an 'attachment device for storage space' (1613), a 'storage for control terminal ID' (1614) an 'acquisition unit for operation signal for attachment device' (1615), and a `transmission unit for operation signal for attachment device' (1616) are further comprised. Moreover, as the 'attachment device for storage space' (1613), an 'automatic door' in the storage space 1 and an 'illumination' in the storage space 4 are provided.

Note that, descriptions of the components already described in the second embodiment will be omitted, and only descriptions of components specific to the third embodiment will be provided.

The 'attachment device for storage space' (1613) is an attachment device provided in each storage space of the AV rack system. Specifically, examples of the attachment device include the illumination equipped in each storage space, the automatic door, and display panel for status of the electronic device stored in the storage space. For example, the 'automatic door' in the storage space 1 and the 'illumination' in the storage space 4 are provided in the third embodiment. Moreover, as to the illumination in the storage space, color of the illumination may be varied accordingly in addition to the on/off of the illumination. Moreover, the intensity of the illumination may be simultaneously varied. Moreover, the automatic door may be made using a material such as plastic or glass. Moreover, the door may open/close not only horizontally but also vertically. Furthermore, the display panel may be in an electric billboard, or a liquid-crystal display. Moreover, the contents displayed on the panel may be the status of the electronic device (e.g., playback or stop), or may be detail of content being reproduced by the electronic device (e.g., title of DVD disc or title of video being reproduced).

The 'storage for control terminal ID' (1614) has a function of correlating a control terminal ID of the attachment device for storage space with the connection ID corresponding to the storage space, and storing the IDs. Specifically, as shown in Fig. 16, the control terminal ID (for example, ID '21001' of the attachment device stored in the 'storage space 1' or ID '22001' of the attachment device stored in the 'storage space 2'), stored in the storage space, and the connection ID given to each storage space (for example, ID '1' for the 'storage space 1 or ID '2' for the 'storage space 2') are correlated and stored. Subsequently, the 'storage for control terminal ID' (1614) is referred by the after-mentioned 'transmission unit for operation signal for attachment device' (1616) to transmit the acquired operation signal for attachment device. The detailed description of the 'transmission unit for operation signal for attachment device' will be provided.

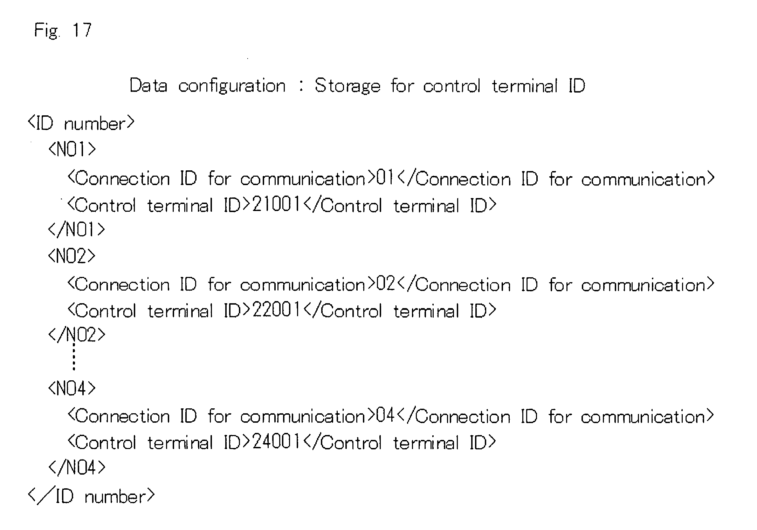

Fig. 17 is a diagram showing a data configuration for correlating the connection ID with a control terminal ID and storing them. The data of Fig. 17 is written in XML format. In this data, the connection ID and the control terminal ID are correlated using the ID number as a key (for example, 'connection ID'='01' for 'ID number', 'No.1', and 'control terminal ID'='21001'). Here, the 'ID number' is just a serial number and a variable having no affect on other components.

The 'acquisition unit for operation signal for attachment device' (1615) has a function of acquiring an operation signal for the attachment device for storage space. Specifically, the operation signal for attachment device to operate the attachment device equipped in the storage space of the AV rack is acquired by the operation signal received by the 'acquisition unit for operation signal' (1606). Examples of the acquired operation signal for attachment device include the open/close instruction of the automatic door equipped in the storage space, and on/off instruction of the illumination.

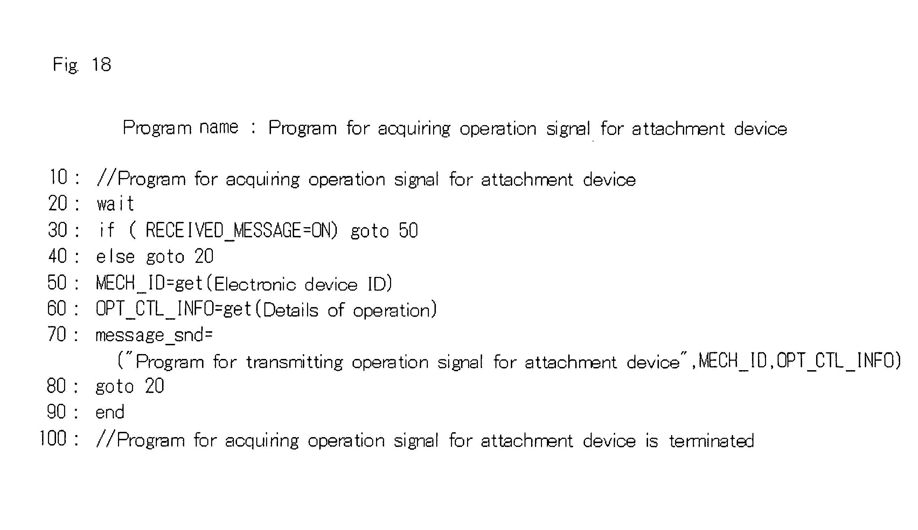

Fig. 18 is a diagram showing a program for actually acquiring an operation signal for attachment device from operation signals. This program is for acquiring the operation signal for attachment device from the operation signal acquired by the acquisition unit for operation signal of Fig. 3. The program of Fig.18 is written so as to operate as follows. The program detects that the operation signal has been received (Fig. 18, Line 30). Subsequently, when receiving the operation signal, operation signal for attachment device included in the operation signal is acquired (Fig. 18, Lines 50 and 60). Subsequently, the acquired operation signal for attachment device is sent do the program for transmitting operation signal for attachment device (Fig. 18, Line 70)

The 'transmission unit for operation signal for attachment device' (1616) has a function of acquiring the control terminal ID correlated with the connection ID acquired by the acquisition unit for connection ID from the storage for control terminal ID, and transmitting the acquired operation signal for attachment device to the control terminal identified by the acquired control terminal ID. Specifically, the storage for electronic device ID is referred based on the electronic device ID included in the operation signal for attachment device acquired by the 'acquisition unit for operation signal for attachment device' (1615), thereby specifying the connection ID. When specifying the connection ID, the control terminal ID is acquired based on the specified connection ID. Subsequently, the operation signal for attachment device is sent to the attachment device having the specified control terminal ID.

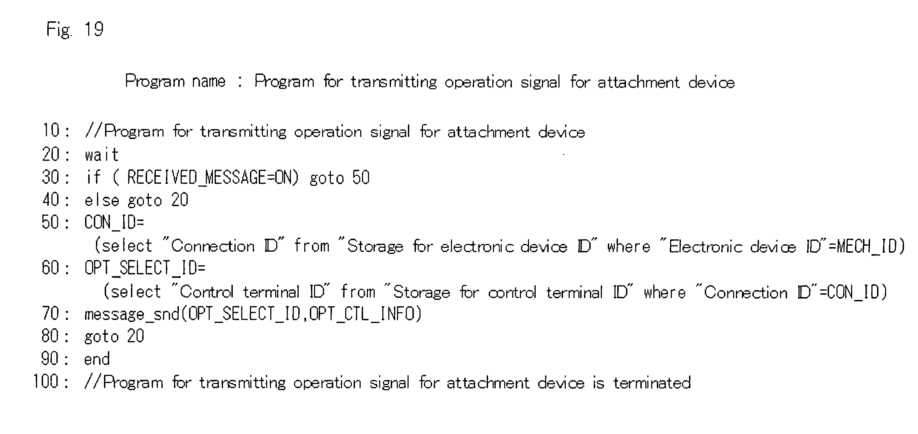

Fig. 19 is a diagram showing a program for specifying the control terminal ID from the acquired electronic device ID, and transmitting the operation signal for attachment device to the attachment device having the specified control terminal ID. The program of Fig.19 is written so as to operate as follows. At the outset, the operation signal for attachment device is received and detected (Fig 19, Line 30). Subsequently, the control terminal ID is acquired based on the acquired electronic device ID (Fig 19, Lines 50 and 60). Subsequently, the operation instruction is transmitted to the attachment device indicated by the acquired control terminal ID (Fig. 19, Line 70).

### <Hardware Configuration of Third Embodiment>

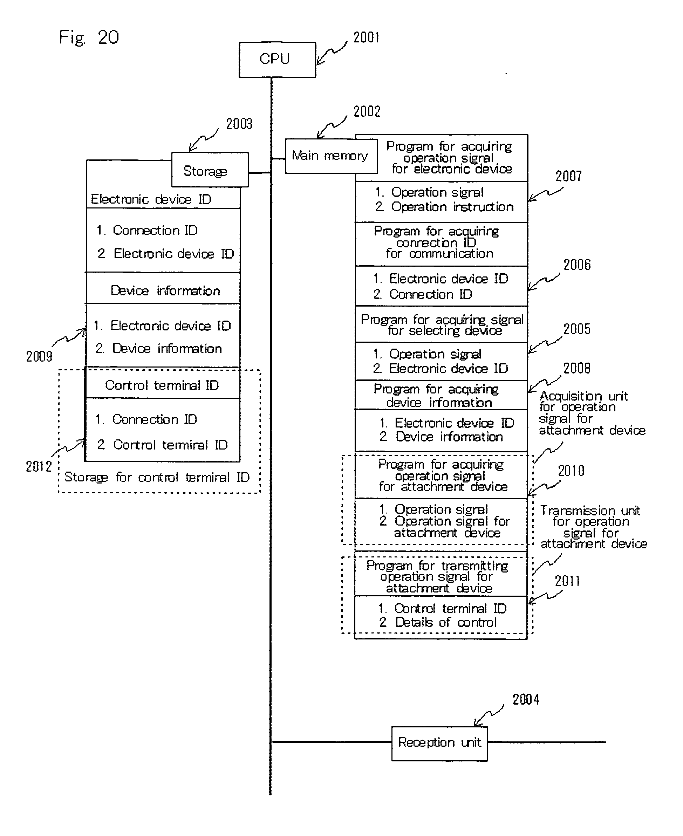

Fig. 20 is a diagram showing an example of a hardware configuration of the 'AV rack' of the third embodiment. With reference to Fig. 20, operation of each hardware of the AV rack of the third embodiment will be described. As shown in Fig. 20, the 'AV rack' comprises a 'CPU' (2001) for various calculations and controls and a 'main memory' (2002), a 'storage' (2003), and a 'reception unit' (2004).

Here, it is assumed that the user does an operation of the automatic door as the attachment device 1 equipped in the storage space 1 as shown in Fig. 16. At the outset, the user transmits the operation signal including the operation signal for attachment device to operate the automatic door as an operation target. Here, the operation signal for attachment device is a signal including the operation instruction for attachment device to operate the automatic door as the attachment device 1. Subsequently, the 'program for acquiring operation signal for attachment device' (2010), developed on a work area in the 'main memory' (2002), is called by the AV rack. The called 'program for acquiring operation signal for attachment device' (2010) acquires operation signal for attachment device included in the operation signal. Subsequently, the acquired information is sent to the 'program for acquiring connection ID for communication' (2006). When receiving the acquired information, the 'program for acquiring connection ID for communication' (2006) specifies the connection ID by referring the 'storage' (2003). Subsequently, the connection ID and the operation instruction for attachment device are sent to the 'program for transmitting operation signal for attachment device' (2011).

When receiving the information, the 'program for transmitting operation signal for attachment device' (2011) refers to the 'storage' (2012), and specifies the control terminal ID. Finally, the acquired control terminal ID and the received operation instruction for attachment device are sent to the AV rack, thereby operating the automatic door.

Here, it is assumed that the user does an operation of the illumination as the attachment device 4 equipped in the storage space 4. At the outset, the user transmits the operation signal including the operation signal for attachment device to operate the illumination as an operation target. Here, the operation signal for attachment device is a signal including the operation instruction for attachment device to operate the illumination as the attachment device 4. Subsequently, the 'program for acquiring operation signal for attachment device' (2010), developed on a work area in the 'main memory' (2002), is called by the AV rack. The called 'program for acquiring operation signal for attachment device' (2010) acquires operation signal for attachment device included in the operation signal. Subsequently, the acquired information is sent to the 'program for acquiring connection ID for communication' (2006). When receiving the acquired information, the 'program for acquiring connection ID for communication' (2006) specifies the connection ID by referring the 'storage' (2003). Subsequently, the connection ID and the operation instruction for attachment device are sent to the 'program for transmitting operation signal for attachment device' (2011). When receiving the information, the 'program for transmitting operation signal for attachment device' (2011) refers to the 'storage' (2012), and specifies the control terminal ID. Finally, the acquired control terminal ID and the received operation instruction for attachment device are sent to the AV rack, thereby operating the illumination.

### <Processing Flow of Third Embodiment>

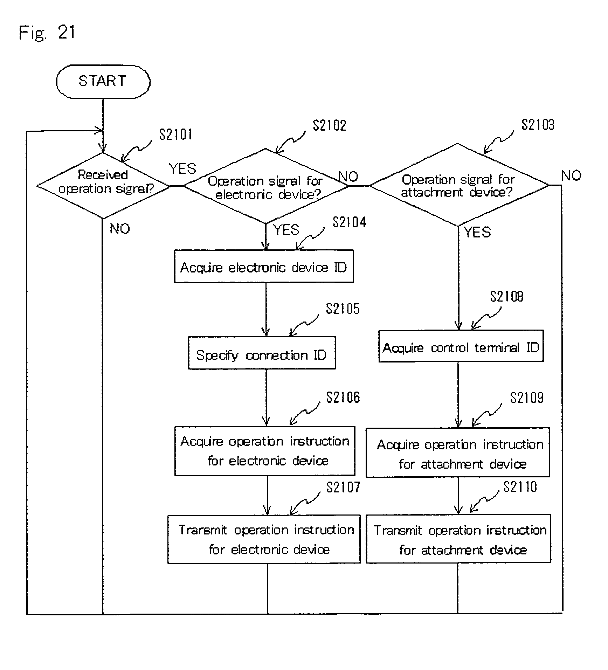

Fig. 21 is a flowchart showing processes from reception of the operation signal to transmission of an operation instruction for attachment device in the AV rack system of the third embodiment. Note that, the flowing steps may be processing steps for configuring a program for controlling a computer, which is recorded in a media.

At the outset, the AV rack receives the operation signal (S2101). When receiving the operation signal, determination of the operation signal is executed (S2102, 2103). Here, if the operation signal is for operating the electronic device, the electronic device ID corresponding to the electronic device is acquired (S2104). Subsequently, when receiving the electronic device ID, the corresponding connection ID is specified based on the electronic device ID (S2105). Subsequently, the operation instruction for attachment device is acquired (S2106). Finally, the operation instruction for attachment device is transmitted to the specified connection ID (S2107).

If the operation signal is for operating the attachment device, the control terminal ID corresponding to the attachment device is acquired (S2108). Subsequently, when receiving the control terminal ID, the operation instruction for attachment device is acquired (S2109). Finally, when acquiring the operation instruction for attachment device, the acquired operation instruction for attachment device is transmitted to the attachment device indicated by the control terminal ID (S2110).

### <Brief Description of Effects of Third Embodiment>

According to the AV rack system of the third embodiment, it is possible to operate the attachment device equipped in the AV rack similar to the operation of electronic devices stored in the storage space.

### <<Fourth Embodiment>>

### <Concept of Fourth Embodiment>

In a fourth embodiment based on the third embodiment, the electronic device stored in each storage space executes the specific operation, thereby defining an interconnecting operation of the attachment device in response to the specific operation. Moreover, by utilizing the definition information, it is possible to interconnect and operate the attachment device etc. in response to the operation of the electronic device stored in each storage space.

### <Functional Configuration of Fourth Embodiment>

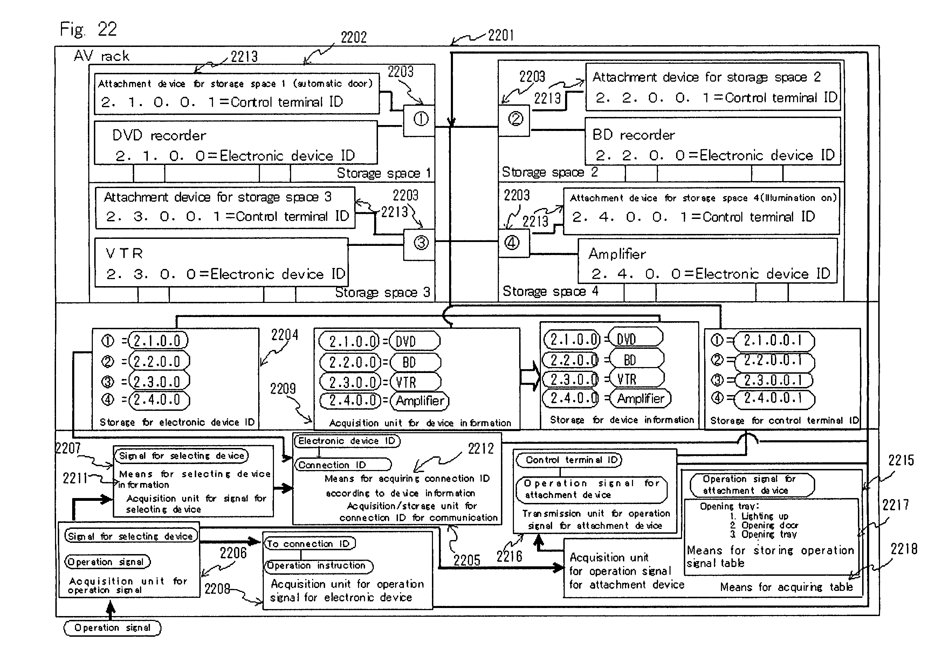

Fig. 22 is a configuration diagram showing an example of an AV rack system of a fourth embodiment. As shown in Fig. 22, in the fourth embodiment based on the third embodiment, an 'acquisition unit for operation signal for attachment device' (2215) further comprises 'means for storing operation signal table' (2217) and 'means for acquiring table' (2218).

Note that, descriptions of the components already described in the second embodiment will be omitted, and only descriptions of components specific to the fourth embodiment will be provided.

The 'means for storing operation signal table' (2217) has a function of storing an operation signal table for determining the operation signal for attachment device according to the operation signal for electronic device. Specifically, according to the detail of the operation signal for electronic device included in the operation signal, operations of attachment device etc (for example, when 'DVD recorder' receives the operation signal 'opening tray', a flow of operations such as '1. opening door' and '2. opening tray' is stored). Here, a target stored in the table may be the operation signal for electronic device. For example, when copying the DVD, it is possible to define such that the electronic devices, VTR and DVD recorder, are interconnected, therefore, it is possible to define such that the DVD recorder starts to play in conjunction with the recording of VTR. Moreover, a plurality of attachment devices may be interconnected with one operation signal for electronic device (for example, when 'DVD recorder' receives the operation signal 'opening tray', a flow of operations such as '1. opening door', '2. illumination on', and '3. opening tray' is stored).

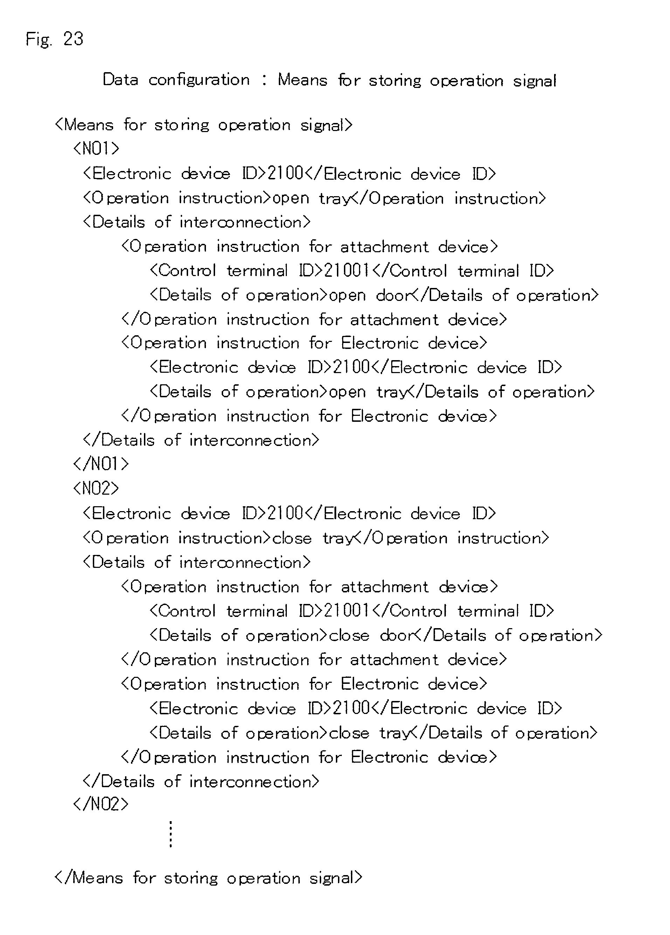

Fig. 23 is a diagram showing a data for defining detail of interconnection of the attachment device to be stored. The data of Fig. 23 is written in XML format. In this data configuration, the 'electronic device ID', its 'operation instruction', and 'detail of interconnection' for defining an instruction to interconnect the attachment device, are correlated and stored. Moreover, with the 'detail of interconnection', the 'operation instruction for electronic device' and the 'operation instruction for attachment device' are correlated (for example, with 'connection ID'='01' for 'No.1' as 'ID number', 'electronic device ID'='2100', 'operation instruction'='opening tray' and 'detail of interconnection' are correlated. Moreover, with the 'detail of interconnection', 'operation signal for attachment device', 'electronic device ID'='2100', and 'detail of operation'='opening door' are correlated). Here, the 'ID number' is just a serial number and a variable having no affect on other components.

The 'means for acquiring table' (2218) has a function of acquiring the operation signal for attachment device from the operation signal table according to the acquired operation signal for electronic device. Specifically, the 'means for storing operation signal table' (2217) is referred according to the operation signal for electronic device included in the operation signal, thereby acquiring the operation signal for attachment device.

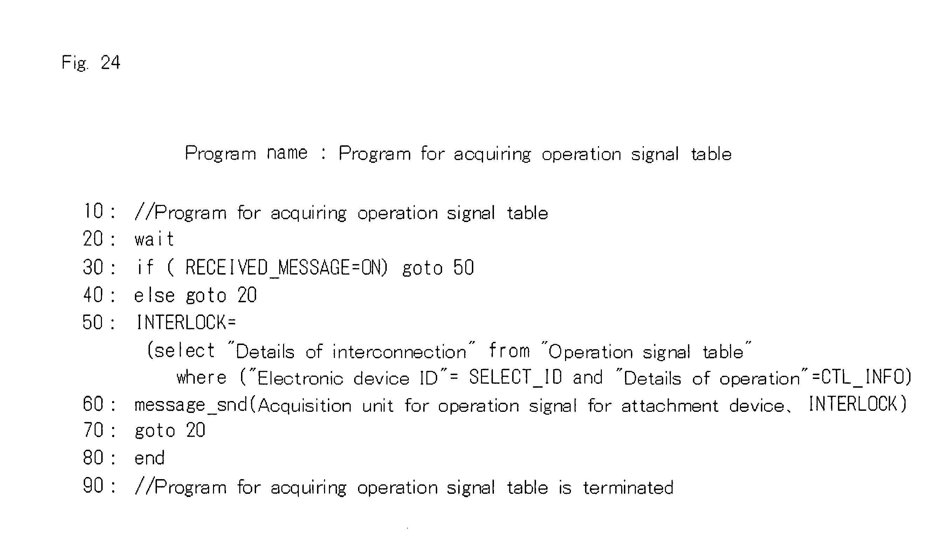

Fig. 24 is a diagram showing a program for acquiring an operation instruction corresponding to the operation signal table according to the acquired electronic device ID and detail of operation. At the outset, when the electronic device ID and the operation detail are sent (Fig. 24, Line 30), the operation signal table is searched using the electronic device ID and the operation detail as keys, thereby acquiring the searched detail of interconnection (Fig. 24, Line 50). Subsequently, the acquired detail of interconnection is sent to the 'acquisition unit for operation signal for attachment device' (Fig. 24, Line 60).

### <Hardware Configuration of Fourth Embodiment>

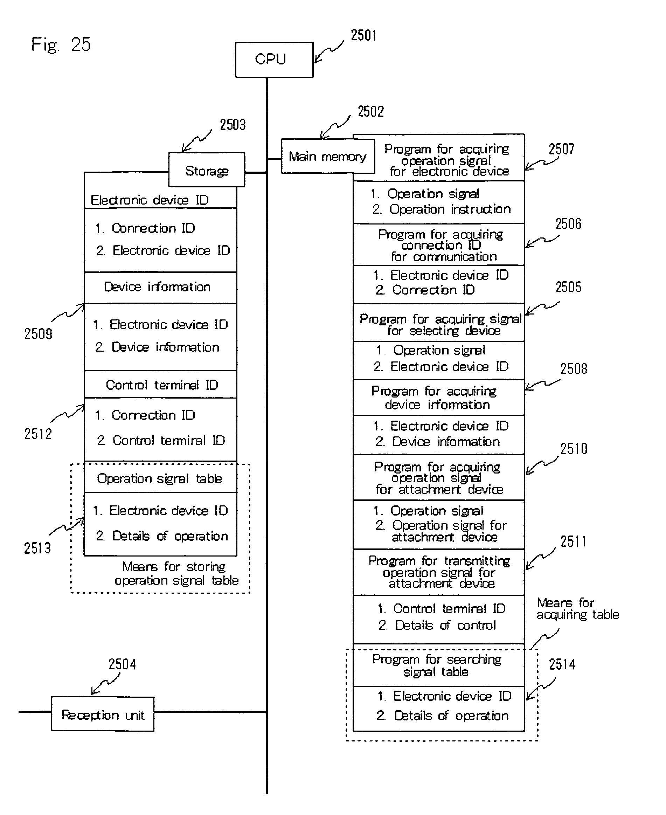

Fig. 25 is a diagram showing an example of a hardware configuration of the 'AV rack' of the fourth embodiment. With reference to Fig. 25, operation of each hardware of the AV rack of the fourth embodiment will be described. As shown in Fig. 25, similar to the third embodiment, the 'AV rack' comprises a 'CPU' (2501) for various calculations and controls and a 'main memory' (2502), a 'storage' (2503), and a 'reception unit' (2504). The detailed description of the components described in the third embodiment will be omitted.

Here, it is assumed that the user operates the opening of tray of the DVD recorder stored in the AV rack. Here, it is assumed that the data is preliminarily registered in the 'storage' (2513) as shown in Fig. 23. At the outset, the operation signal including the operation signal for electronic device (here, a signal including the operation instruction of opening tray of the DVD recorder) is received. Subsequently, when receiving the operation signal, the 'program for acquiring operation signal for electronic device' and the 'program for acquiring operation signal for attachment device' acquires the operation signal for electronic device and the operation signal for attachment device (here, the electronic device ID='2100', included in the operation signal for electronic device, and the detail of operation='opening tray' are acquired). Subsequently, when acquiring the operation signal for electronic device, a 'program for searching signal table' (2514), developed on a work area in the 'main memory', is called.

The called 'program for searching signal table' (2514) searches the 'storage' (2513) according to the acquired electronic device ID and the detail of operation (here, the record of ID='No1' of Fig. 23 is a target of search). Subsequently, the detail of interconnection in the searched record is acquired (here, instructions of 1. opening door, and 2. opening tray are acquired). When acquiring the detail of interconnection, the detail of interconnection is sent to a 'program for transmitting operation signal for attachment device', thereby executing the detail of interconnection (door opens and tray opens).

### <Processing Flow of Fourth Embodiment>

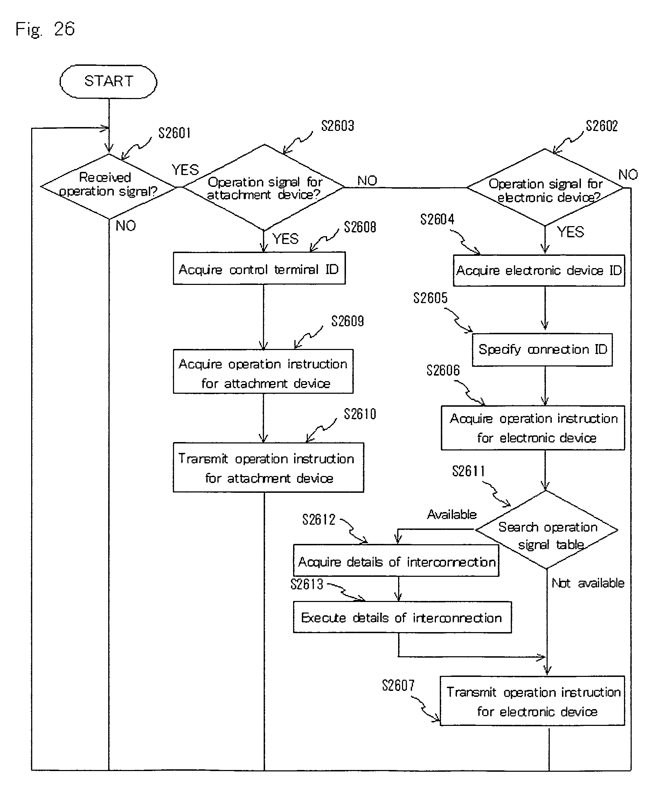

Fig. 26 is a flowchart showing processes from reception of the operation signal to interconnection process for attachment device in the AV rack system of the fourth embodiment. Note that, the flowing steps may be processing steps for configuring a program for controlling a computer, which is recorded in a media.

At the outset, the AV rack receives the operation signal (S2601). When receiving the operation signal, determination of the operation signal is executed (S2602, 2603). Here, if the operation signal is for operating the attachment device, the control terminal ID corresponding to the attachment device is acquired (S2608). Subsequently, when receiving the control terminal ID, the operation instruction for attachment device is acquired (S2609). Finally, when acquiring the operation instruction for attachment device, the acquired operation instruction for attachment device is transmitted to the attachment device indicated by the control terminal ID (S2610).

If the operation signal is for operating the electronic device, the electronic device ID corresponding to the electronic device is acquired (S2604). Subsequently, when receiving the electronic device ID, the corresponding connection ID is specified based on the electronic device ID (S2605). When specifying the connection ID, the operation instruction for electronic device is acquired (S2606). Subsequently, the operation signal table is searched by the acquired operation instruction for electronic device (S2611). If the search result indicates that there is a hit, the detail of interconnection, stored in the signal table, is acquired (S2612). Subsequently, according to the acquired detail of interconnection, the interconnection is executed (S2613). Finally, the operation instruction for electronic device is transmitted to the specified connection ID (S2607). If there is no hit, only the transmission of the operation instruction for electronic device to the specified connection ID

### <Brief Description of Effects of Fourth Embodiment>

According to the AV rack system of the fourth embodiment, it is possible to execute the operation instruction for attachment device, correlated with the operation instruction and registered, by the operation instruction transmitted from the user's side. Therefore, it is possible to execute an operation for dramatic impact such as illumination-on of the AV rack system in response to the user's operation.

### BRIEF DESCRIPTION OF THE DRAWINGS

Fig. 1 is a configuration diagram showing an example of an AV rack system of a first embodiment.
Fig. 2 is a diagram showing data configuration in a storage for electronic device ID of the AV rack system of the first embodiment for correlating a connection ID with an electronic device ID and storing the IDs.
Fig. 3 is a diagram showing data configuration of the operation signal to be received in an acquisition unit for operation signal of the AV rack system of the first embodiment.
Fig. 4 is a diagram showing a program in an acquisition unit for signal for selecting device of the AV rack system of the first embodiment for acquiring a signal for selecting device.
Fig. 5 is a diagram showing a program in an acquisition unit for connection ID for communication of the AV rack system of the first embodiment for acquiring the connection ID based on the received signal for selecting device.
Fig. 6 is a diagram showing a program in an acquisition unit for operation signal for electronic device of the AV rack system of the first embodiment for acquiring an operation signal for electronic device from the operation signals.
Fig. 7 is a diagram showing an example of a hardware configuration of the AV rack system of the first embodiment.
Fig. 8 is a flowchart showing processes from reception of the operation signal to transmission of an operation instruction in the AV rack system of the first embodiment.
Fig. 9 is a configuration diagram showing an example of an AV rack system of a second embodiment.
Fig. 10 is a diagram showing a program in an acquisition unit for device information of the AV rack system of the second embodiment for acquiring stored device information.
Fig. 11 is a diagram showing a data configuration in a storage for device information of the AV rack system of the second embodiment for correlating an electronic device ID with a device information and storing them.
Fig. 12 is a diagram showing an example of a selection screen in means for selecting device information of the AV rack system of the second embodiment
Fig. 13 is a diagram showing a program and means for acquiring connection ID according to device information of the AV rack system of the second embodiment for acquiring the connection ID based on the received device information.
Fig. 14 is a diagram showing an example of a hardware configuration of the AV rack system of the second embodiment.
Fig. 15 is a flowchart showing processes from output of the selection screen to transmission of an operation instruction in the AV rack system of the second embodiment.
Fig. 16 is a configuration diagram showing an example of an AV rack system of a third embodiment.
Fig. 17 is a diagram showing a data configuration in a storage for control terminal ID of the AV rack system of the third embodiment for correlating the connection ID with a control terminal ID and storing them.
Fig. 18 is a diagram showing a program in an acquisition unit for operation signal for attachment device of the AV rack system of the third embodiment for acquiring an operation signal for attachment device from operation signals.
Fig. 19 is a diagram showing a program in a transmission unit for operation signal for attachment device of the AV rack system of the third embodiment for specifying the control terminal ID from the acquired electronic device ID, and transmitting the operation signal for attachment device to the attachment device having the specified control terminal ID.
Fig. 20 is a diagram showing an example of a hardware configuration of the AV rack system of the third embodiment.
Fig. 21 is a flowchart showing processes from reception of the operation signal to transmission of an operation instruction for attachment device in the AV rack system of the third embodiment.
Fig. 22 is a configuration diagram showing an example of an AV rack system of a fourth embodiment.
Fig. 23 is a diagram showing a data configuration in a storage for operation signal of the AV rack system of the fourth embodiment for defining detail of interconnection of the attachment device to be stored.
Fig. 24 is a diagram showing a program in means for acquiring table of the AV rack system of the fourth embodiment for acquiring an operation instruction corresponding to the operation signal table according to the acquired electronic device ID and detail of operation.
Fig. 25 is a diagram showing an example of a hardware configuration of the AV rack system of the fourth embodiment.
Fig. 26 is a flowchart showing processes from reception of the operation signal to interconnection process for attachment device in the AV rack system of the fourth embodiment.

### Description of Reference Numerals

0101 AV rack
0102 Storage space
0103 connection unit for communication
0104 Storage for electronic device ID
0105 Acquisition/storage unit for connection ID for communication
0106 Acquisition unit for operation signal
0107 Acquisition unit for signal for selecting device
0108 Acquisition unit for operation signal for electronic device
0909 Acquisition unit for device information
0910 Storage for device information
0911 Means for selecting device information
0912 Means for acquiring connection ID according to device information
1613 Attachment device for storage space
1614 Storage for control terminal ID
1615 Acquisition unit for operation signal for attachment device
1616 Transmission unit for operation signal for attachment device
2217 Means for storing operation signal table
2218 Means for acquiring table

## Claims

1. An AV rack system, comprising:
storage spaces for a plurality of electronic devices;
a connection unit for communication, which is correlated with identification of ID used for transmission/reception of an operation signal by the electronic devices to be placed in the respective storage spaces;
a storage for electronic device ID, correlating a connection ID of the connection unit for communication with an electronic device ID for identifying the electronic device using the connection ID, and storing the IDs;
an acquisition unit for operation signal;
an acquisition unit for signal for selecting device, acquiring a signal for selecting device correlated with the electronic device ID;
an acquisition/storage unit for connection ID for communication, searching the storage for electronic device ID using the electronic device ID correlated with the acquired signal for selecting device as a key, and acquiring and storing the connection ID of the connection unit for communication as a transmission destination for the operation signal; and
an acquisition unit for operation signal for electronic device, receiving the operation signal to be transmitted for the stored connection ID.

2. The AV rack system according to Claim 1, further comprising:
an acquisition unit for device information, acquiring device information correlated with the electronic device ID from the electronic device connected with the connection unit for communication, the device information including at least type of device; and
a storage for device information, correlating the acquired device information and the electronic device ID, and storing the IDs.
wherein the acquisition unit for signal for selecting device comprises
means for selecting device information, acquiring information for selecting device correlated with the device information stored in the storage for device information, and the acquisition unit for connection ID for communication comprises
means for acquiring connection ID according to device information, acquiring the connection ID by utilizing the electronic device ID acquired from the storage for device information according to the device information selected by the means for selecting device information.

3. The AV rack system according to Claim 1 or 2, further comprising:
an attachment device for storage space, equipped in each storage space;
a storage for control terminal ID, correlating a control terminal ID of the attachment device for storage space with the connection ID corresponding to the storage space, and storing the IDs;
an acquisition unit for operation signal for attachment device, acquiring an operation signal for the attachment device for storage space; and
a transmission unit for operation signal for attachment device, acquiring the control terminal ID correlated with the connection ID acquired by the acquisition unit for connection ID from the storage for control terminal ID, and transmitting the acquired operation signal for attachment device to the control terminal identified by the acquired control terminal ID.

4. The AV rack system according to any one of Claims 1 to 3,
wherein the acquisition unit for operation signal for attachment device comprises,
means for storing operation signal table, storing an operation signal table determining the operation signal for attachment device according to the operation signal for electronic device, and
means for acquiring table, acquiring the operation signal for attachment device from the operation signal table according to he acquired operation signal for electronic device.

5. The AV rack system according to Claim 2 or 3,
wherein the attachment device is an illumination device for the respective storage spaces.

6. The AV rack system according to any one of Claims 2 to 4,
wherein the attachment device is a door-opening motor for the respective storage spaces.

7. The AV rack system according to any one of Claims 1 to 6,
wherein the electronic device equipped in the storage space and the AV rack are mutually connected through a cable complying with HDMI (High-Definition Multimedia Interface) standard, and signal complying with CEC (Consumer Electronics Control) standard is used.
